Europäisches Patentamt

European Patent Office

Office européen des brevets

(19)

(11) Numéro de publication: **0 054 995**
**A1**

## (12) DEMANDE DE BREVET EUROPEEN

(21) Numéro de dépôt: 81201344.9

(22) Date de dépôt: **10.12.81**

(51) Int. Cl.³: **A 23 K  3/03**

(30) Priorité: **22.12.80  FR 8027408**

(43) Date de publication de la demande: **30.06.82**
**Bulletin 82/26**

(84) Etats contractants désignés: **AT BE CH DE FR GB IT LI NL SE**

(71) Demandeur: **INTEROX Société anonyme dite:, Rue du Prince Albert, 33, B-1050 Bruxelles (BE)**

(72) Inventeur: **Coppens, Guillaume, Avenue Louis Jasmin 89, B-1150 Bruxelles (BE)**
Inventeur: **Gago, Ignace, Chaussée de Nivelles, 53, B-1420 Braine-l'Alleud (BE)**

(74) Mandataire: **Eischen, Roland, Solvay & Cie Département de la Propriété Industrielle Rue de Ransbeek 310, B-1120 Bruxelles (BE)**

(54) **Fourrages ensilés.**

(57) On améliore la conservation en silos des fourrages pour l'alimentation des animaux en ajoutant au fourrage un composé peroxydé à caractère alcalin tel que le peroxyde de calcium.

EP 0 054 995 A1

COMPLETE DOCUMENT

Fourrages ensilés

Cas INT.80/4

INTEROX (Société Anonyme)

La présente invention concerne des fourrages ensilés de conservation améliorée.

La conservation des fourrages en silos, entraîne fréquemment une réduction de leur valeur nutritive, et notamment une perte de matières azotées due à une solubilisation parfois importante des matières protéiques accompagnée d'une dégradation allant jusqu'à la formation d'ammoniac. L'ingestibilité des fourrages ensilés est en outre souvent réduite, notamment lorsque la teneur en acide lactique et en sels d'ammonium est trop élevée.

Par ailleurs, la conservation des fourrages en silos est souvent malaisée, surtout lorsqu'il s'agit de fourrages verts pauvres en matières sèches, du fait des risques de fermentations putrides qui rendent les fourrages ensilés impropres à la consommation. On peut également observer l'apparition de microorganismes sporulants, qui, lorsque le fourrage ensilé est ingéré par des vaches laitières, rendent le lait recueilli impropre pour la fabrication de fromages à pâte dure, ou encore la formation de quantités importantes d'acide butyrique au détriment de l'acide lactique, qui peuvent également rendre le fourrage impropre à la consommation.

Pour pallier ces inconvénients, on utilise des agents de conservation des fourrages ensilés. Ces agents sont choisis parmi des produits à pouvoir acidifiant tels que l'acide formique de manière à abaisser le pH des fourrages ensilés. On a également proposé d'asperger le fourrage au moyen d'une solution aqueuse contenant du peroxyde d'hydrogène et du sulfate de fer (certificat d'auteur URSS 242 661 déposé le 19 avril 1968 au nom de A.Konoplev).

Les agents de conservation des fourrages ensilés connus présentent cependant des inconvénients divers. Dans certains cas, les doses à mettre en oeuvre pour obtenir une efficacité satisfaisante sont élevées et conduisent à une réduction des fermentations dans le rumen du bétail et de la digestibilité des aliments. En outre, on observe malgré tout une réduction de la valeur nutritive de l'aliment. De plus, les quantités de fourrages ensilés ingérées par les animaux sont souvent faibles. Enfin, malgré l'utilisation de ces agents, la conservation en silos de certaines plantes fourragères est malaisée.

La présente invention vise à procurer des fourrages ensilés contenant un agent de conservation qui ne présente pas les inconvénients mentionnés ci-avant et dont l'appétence est améliorée.

L'invention concerne à cet effet des fourrages ensilés de conservation améliorée contenant un composé peroxydé à caractère alcalin comme agent de conservation.

On peut utiliser un seul composé peroxydé ou un mélange de composés peroxydés.

Par composé peroxydé à caractère alcalin, on entend désigner n'importe quel composé peroxydé qui, lorsqu'il est dissous dans l'eau, lui confère un pH d'au moins 7. Ces composés peroxydés sont en général des composés d'addition du peroxyde d'hydrogène, des persels ou des peroxydes métalliques. Comme exemple de composés d'addition du peroxyde d'hydrogène, on peut signaler le peroxyde d'urée. Les persels et peroxydes métalliques conviennent bien pour être incorporés dans les fourrages selon l'invention. On peut ainsi y utiliser des persels de nature organique tels que les sels de peracides organiques, ou des persels de nature inorganique tels que les percarbonates et perphosphates.

Le plus souvent, les persels et peroxydes métalliques sont des dérivés des métaux des groupes 1 et 2 du Tableau périodique des Eléments. De préférence, les composés peroxydés mis en oeuvre sont des peroxydes métalliques, et plus particulièrement des peroxydes des métaux du groupe 2, et des percarbonates. Le peroxyde de calcium et le percarbonate de sodium, seuls ou en mélange, sont tout particulièrement préférés.

Les composés peroxydés mis en oeuvre dans les fourrages selon l'invention peuvent l'être seuls ou en mélanges avec d'autres substances et notamment en association avec des agents de dilution tels que ceux habituellement présents dans les produits disponibles commercialement. Ces agents de dilution peuvent être présents en quantités très variables en général comprises entre 0 et 400% en poids du composé peroxydé. Ils peuvent également être associés à des stabilisants des composés peroxydés de natures diverses. Ces stabilisants du peroxyde sont en général utilisés dans des proportions comprises entre 0 et 30% du poids de composé peroxydé. Ils peuvent enfin être associés à d'autres additifs tels que des agents bactériostatiques ou antifongiques, des ferments lactiques, etc. Les additifs sont en général présents dans des proportions inférieures à 100 % et le plus souvent comprises entre 0 et 50% en poids du composé peroxydé.

Quand le composé peroxydé est le peroxyde de calcium, il s'agit en général d'un produit commercial contenant de 30 à 90% en poids de peroxyde de calcium, le solde étant constitué notamment d'oxyde et d'hydroxyde de calcium et éventuellement d'un sel de calcium et d'eau.

Quand le composé peroxydé est le percarbonate de sodium, il s'agit en général aussi d'un produit commercial contenant plus de 70% en poids de percarbonate de sodium, et éventuellement des stabilisants.

Les composés peroxydés peuvent se trouver sous des formes physiques diverses. On peut ainsi les mettre en oeuvre sous forme de solide sec ou sous forme de solutions ou suspensions dans un solvant tel que l'eau. Le plus souvent on les met en oeuvre sous forme solide, soit à l'état sec, soit à l'état de suspension dans

- 4 -

un milieu tel que l'eau. Dans ces cas, les dimensions des particules de composés peroxydés sont en général comprises entre 0,0001 et 1 mm. On peut aussi également mettre les composés peroxydés en oeuvre sous forme de solution. Dans ce cas, on utilise le plus souvent des solutions concentrées, en général voisines de la saturation.

Le composé peroxydé peut se trouver dans les fourrages selon l'invention en quantités fort variables. En général, il est présent à raison de plus de 0,0001% de composé peroxydé (calculé en oxygène actif) par rapport au poids de fourrage (exprimé en matières sèches) et de préférence à raison de plus de 0,001%. Les quantités mises en oeuvre ne dépassent en général pas 5%, et de préférence 2%, de composé peroxydé (calculé en oxygène actif) par rapport au poids de fourrage (exprimé en matières sèches).

Les fourrages selon l'invention peuvent être à base de fourrages de n'importe quel type, qu'il s'agisse d'herbe ou d'autres graminées fourragères, de céréales fourragères (orge, maïs, avoine, blé, soja, sorgho, seigle), de racines, tubercules et produits dérivés (betteraves, pulpes, feuilles et collets de betteraves), de légumineuses fourragères (féverole, luzerne, sainfoin, trèfles), de choux, de tournesols ou de déchets de végétaux (fanes, rafles, balles de céréales, son, épis de maïs égrenés, bagasse).

L'invention s'applique particulièrement bien aux fourrages contenant au moins 50% en poids d'humidité. De bons résultats ont été obtenus avec l'herbe de prairie, le maïs et l'avoine, éventuellement préfanés.

Les fourrages ensilés selon l'invention peuvent en outre contenir divers autres additifs susceptibles d'améliorer leur valeur nutritive, leur ingestibilité et l'appétence des animaux et notamment des matières azotées non protéiques, telles que l'urée, le biuret et leurs dérivés, des glucides, tels que les mélasses, et des matières amylacées ou cellulosiques telles que les farines.

Ces additifs sont en général utilisés à raison de 0 à 20% du poids du fourrage vert exprimé en matières sèches.

Les fourrages selon l'invention sont obtenus en leur ajoutant un composé peroxydé à caractère alcalin de manière à obtenir un mélange intime du composé peroxydé avec le fourrage de départ.

Les fourrages verts peuvent être broyés, hachés ou dilacérés au préalable selon des techniques connues en elles-mêmes.

On peut utiliser des fourrages verts en coupe directe ou des fourrages préfanés à teneur en matières sèches plus ou moins élevée. Lorsqu'il s'agit de fourrages à très haute teneur en humidité, tels que l'herbe de prairie, on peut les préfaner légèrement selon des techniques connues en elles-mêmes. On peut ainsi les déshydrater légèrement pour obtenir des teneurs en matières sèches supérieures à 18% et en général comprises entre 20 et 50% en poids.

En général l'incorporation du composé peroxydé dans le fourrage vert peut se faire avantageusement au fur et à mesure de la mise en silo soit par aspersion au moyen de la solution ou suspension de composé peroxydé soit par épandage du composé peroxydé se trouvant sous la forme d'un solide pulvérulent. La masse ainsi obtenue est tassée et conservée dans des conditions anaérobies.

L'ensilage lui-même peut se faire selon diverses techniques connues en elles-mêmes. On peut ainsi ensiler en tour, horizontalement ou en meules. L'ensilage peut aussi se faire dans les récipients prévus à cet effet ou directement à même le sol. La masse ensilée peut ainsi être conservée pendant des durées variables. En général, elle est conservée de 1 à 8 mois. Lors de l'ouverture du silo, on peut ajouter à la masse ensilée des agents antifongiques.

Les rations alimentaires des animaux nourris au moyen des fourrages ensilés selon l'invention peuvent être complétées par d'autres aliments en général choisis parmi les fourrages déshydratés et les concentrés ainsi que par des mélanges à base de vitamines et d'oligoéléments. La ration alimentaire peut ainsi contenir de 5 à 100% de fourrages ensilés selon l'invention.

Lorsque la ration alimentaire contient des quantités substantielles de fourrages ensilés selon l'invention, dépassant en général 30% de son poids, on peut lui ajouter de petites quantités de composés minéraux à caractère légèrement alcalin ou à pouvoir tampon.

- 6 -

L'utilisation des fourrages ensilés selon l'invention dans les rations alimentaires pour ruminants se fait avantageusement en accroissant la proportion de fourrage ensilé dans la ration progressivement de manière connue en elle-même.

Afin d'illustrer l'invention, on donne ci-après un exemple pratique de réalisation (exemple 1). L'exemple 2 a été réalisé à titre de comparaison.

Exemple 1

On mélange de l'herbe de prairie préfanée d'un jour, ayant une teneur en humidité de 75%, avec des particules de peroxyde de calcium (à 80%) dont le diamètre moyen est de 0,01 mm, à raison de 2 kg de peroxyde par tonne d'herbe.

On remplit un silo d'environ 2 tonnes de mélange, on tasse et on couvre.

Le fourrage est conservé ainsi pendant deux mois.

Après conservation, l'herbe ensilée a une faible odeur de fermentation lactique. Cette odeur n'est pas agressive. Le pH du fourrage est alors de 4,2, l'acidité totale étant de 18,2 milliéquivalents par 100 g de matière telle quelle. La teneur en matières azotées totales est de 0,92 g (exprimée en azote) par kg de matière telle quelle.

Exemple 2

La conservation de l'herbe est réalisée selon la technique décrite à l'exemple 1 mais sans addition de peroxyde de calcium.

Après deux mois de conservation, l'herbe ensilée a des odeurs de fermentation très violentes qui comportent outre l'odeur de fermentation lactique, des odeurs diverses notamment de fermentations putrides. Le pH est de 4,1, l'acidité totale étant de 19,2 milliéquivalents par 100 g de matière telle quelle. La teneur en matières azotées totales est de 0,75 g (exprimée en azote) par kg de matière telle quelle.

- 7 -

REVENDICATIONS

1 - Fourrages ensilés de conservation améliorée, caractérisés en ce qu'ils contiennent un composé peroxydé à caractère alcalin comme agent de conservation.

2 - Fourrages ensilés selon la revendication 1, caractérisés en ce qu'ils contiennent de 0,001 à 2% de composé peroxydé, calculé en oxygène actif, par rapport au poids de matières sèches du fourrage.

3 - Fourrages ensilés selon la revendication 1 ou 2, caractérisés en ce que le composé peroxydé à caractère alcalin est un composé d'addition du peroxyde d'hydrogène, un persel ou un peroxyde métallique.

4 - Fourrages ensilés selon la revendication 3, caractérisés en ce que le composé peroxydé à caractère alcalin est le percarbonate de sodium.

5 - Fourrages ensilés selon la revendication 3, caractérisés en ce que le composés peroxydé à caractère alcalin est un peroxyde d'un métal des groupes 1 et 2 du Tableau périodique des Eléments.

6 - Fourrages ensilés selon la revendication 5, caractérisés en ce que le composé peroxydé à caractère alcalin est le peroxyde de calcium.

7 - Fourrages ensilés selon l'une quelconque des revendications 1 à 6 caractérisés en ce qu'ils sont à base de fourrages contenant au moins 50% en poids d'humidité.

8 - Fourrages ensilés selon l'une quelconque des revendications 1 à 7, caractérisés en ce qu'ils sont à base d'herbe de prairie, de maïs ou d'avoine.

9 - Fourrages ensilés selon l'une quelconque des revendications 1 à 8, caractérisés en ce qu'ils contiennent en outre au moins un additif choisi parmi les matières azotées non protéiques, les glucides solubles et les matières amylacées ou cellulosiques.

0054995

Office européen
des brevets

**RAPPORT DE RECHERCHE EUROPEENNE**

Numéro de la demande

EP 81 20 1344

| Catégorie | Citation du document avec indication, en cas de besoin, des parties pertinentes | Revendication concernée |
|---|---|---|
| X | CHEMICAL ABSTRACTS, vol. 78, no. 7, 19 février 1973, page 358, résumé 41836f<br>Columbus, Ohio, US<br>L.E. FLEISHMAN et al.: "Chemical preservation of bagasse and improvement of its food value"<br>& Tr. Vses. Nauch-Issled, Inst. Sakh. Prom. 1969, no. 15, 215-34<br> * Abrégé * | 1-3,5 |
| Y | CHEMICAL ABSTRACTS, vol. 89, no. 17, 23 octòbre 1978, page 487, résumé 145393c<br>Columbus, Ohio, US<br>& JP - A - 78 52 647 (YOSHIDA, TADAYUKI) (13-5-1978)<br> * Abrégé * | 1-3,5-8 |
| Y | FR - A - 346 377 (A. KRAUSE)<br> * En entier * | 1-9 |
| Y | FR - A - 466 393 (A. RUTTER)<br> * Résumé * | 1-9 |
| Y | FR - A - 2 276 001 (SAKAI I.)<br> * Revendications * | 1-3, 5-9 |
| A | DE - C - 363 877 (F. THEUERKAUF)<br> * En entier * | 1-3,5, 6,8,9 |

**DOCUMENTS CONSIDERES COMME PERTINENTS**

**CLASSEMENT DE LA DEMANDE (Int. Cl. 3)**

A 23 K 3/03

**DOMAINES TECHNIQUES RECHERCHES (Int. Cl. 3)**

A 23 K
A 23 L
A 23 B

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons
&: membre de la même famille, document correspondant

X Le présent rapport de recherche a été établi pour toutes les revendications

| Lieu de la recherche | Date d'achèvement de la recherche | Examinateur |
|---|---|---|
| La Haye | 01-04-1982 | GALLIGANI |

OEB Form 1503.1   06.78

0054995

Numéro de la demande

Office européen
des brevets

RAPPORT DE RECHERCHE EUROPEENNE

EP 81 20 1344

-2-

| Catégorie | Citation du document avec indication, en cas de besoin, des parties pertinentes | Revendication concernée |
|---|---|---|
| DA | CHEMICAL ABSTRACTS, vol. 71, no. 17, 27 octobre 1969, page 253, résumé 79959s Columbus, Ohio, US <br><br> & SU - A - 242 661(ALL-UNION SCIENTIFIC RESEARCH INSTITUTE OF ANIMAL HUSBANDRY)(25 avril 1969) <br><br> * Abrégé * | 1 |
| A | DE - C - 648 908 (M. HOFFMANN) | |
| A | FR - A - 2 345 940 (ASTRA-EWOS AB) | |
| A | US - A - 3 792 177 (H. NAKATANI AND K. KATAGIRI) | |
| A | SOVIET INVENTIONS ILLUSTRATED, Section CH, Chemical Week C 20, 25 juin 1980, Subsection D, page 7 Londres , GB <br><br> & SU - A - 686 717 (POULTRY RES TECHN)(25-09-1979) <br><br> * Abrégé * | |

DOCUMENTS CONSIDERES COMME PERTINENTS

CLASSEMENT DE LA DEMANDE (Int. Cl.³)

DOMAINES TECHNIQUES RECHERCHES (Int. Cl.³)

OEB Form 1503.2   06.78